# EUROPEAN PATENT SPECIFICATION

(11) **EP 2 871 453 B1**
(45) Date of publication and mention of the grant of the patent: **26.09.2018**
(21) Application number: 13813581.9
(22) Date of filing: 17.04.2013
(51) Int. Cl.: G01K 17/08, G01K 17/00, B21B 37/74, G01N 25/18, B21B 38/00

(54) **GAUGE FOR MEASURING TWO-DIMENSIONAL HEAT FLUX**
MESSVORRICHTUNG ZUR VERMESSUNG EINES ZWEIDIMENSIONALEN WÄRMEFLUSSES
DISPOSITIF DE MESURE DE FLUX THERMIQUE EN DEUX DIMENSIONS

(30) Priority: 05.07.2012 KR 20120073331
(43) Date of publication of application: 13.05.2015
(73) Proprietor: Korea Institute Of Machinery & Materials, Yuseong-gu Daejeon 305-343 (KR)
(72) Inventor: LEE, Jung Ho, Daejeon 305-343 (KR); OH, Dong Wook, Daejeon 305-343 (KR); DO, Kyu Hyung, Daejeon 305-343 (KR); KIM, Tae Hoon, Daejeon 305-343 (KR)
(74) Representative: Delorme, Nicolas
(86) International application number: PCT/KR2013/003254
(87) International publication number: WO 2014/007456

(56) References cited:
- JP-A- S57 132 046
- JP-A- S60 209 139
- KR-B1- 100 912 240
- KR-B1- 100 912 240
- KR-B1- 100 955 461
- KR-B1- 100 955 461
- KR-B1- 100 991 107

## Description

### BACKGROUND OF THE INVENTION

### (a) Field of the Invention

The present invention relates to a gauge for measuring 2-dimensional heat flux. More particularly, the present invention relates to a gauge for measuring 2-dimensional heat flux that is capable of measuring heat flux of a thick plate in a thickness direction and a radial direction.

### (b) Description of the Related Art

Generally, a metal plate having a thickness of 6 mm or more is called a thick plate. This thick plate is manufactured by a rolling process of rolling a slab heated to a high temperature so as to have a target thickness and width by a rolling mill and an accelerated cooling process of cooling upper and lower surfaces of the thick plate using an accelerated cooling device of the thick plate during cooling of the thick plate in order to control a temperature difference between head and tail portions of the thick plate.

The thick plate is subjected to heat movement and plastic deformation processes in the above-mentioned rolling process and accelerated cooling process. These processes have a significant influence on shape quality of a thick plate product such as plate deformation as well as physical properties of a thick plate material. When considering this, cooling heat transfer characteristics at a high temperature such as surface temperature, heat flux, and a heat transfer coefficient in the accelerated cooling process should be able to be accurately measured in order to manufacture a thick plate having desired characteristics.

In this accelerated cooling process, a steel plate needs to be cooled in a short time so that a surface temperature thereof is decreased from about 900 °C to about 400 °C, and effective cooling control is required in order to minimize thermal deformation of the steel plate occurring by a temperature deviation.

According to the related art, an effort to recognize changes in surface and internal temperatures of the steel plate depending on a change in time and heat transfer characteristics in the accelerated cooling process by installing a contact type of sensor or a non-contact type of sensor in an accelerated cooling device performing the accelerated cooling process in order for the accelerated cooling device to perform cooling control has been conducted.

A typical example of the contact type of sensor installed in the accelerated cooling device in order to recognize the heat transfer characteristics in the accelerated cooling device may include a thermocouple. In the case in which the thermocouple is installed on a surface of the thick plate, a change in fluid flow and a change in a boiling phenomenon occur by the installed thermocouple itself to cause a change in measurement of a surface temperature. Since a large error occurs in temperature measurement due to radiation, particularly at a high temperature, the surface temperature of the thick plate in the accelerated cooling process may not be accurately measured using the contact type of sensor.

In the case of measurement using the non-contact type of sensor such as an infrared thermometer, direct measurement is impossible due to a flow of excessive steam and water jet and an influence of remaining water.

KR 100 912 240 describes a heat flux gauge for determining the heat flux in a thick plate; it comprises heaters, and temperature sensors which are arranged in the longitudinal direction of a generally cylindrical device.

KR 100 955 461 describes a heat flux gauge for determining the heat flux in a thick plate; it comprises heaters, and temperature sensors which are arranged along the circumferential direction (at a top part and a bottom part) of a generally cylindrical device.

### SUMMARY OF THE INVENTION

The present invention has been made in an effort to provide a gauge for measuring 2-dimensional heat flux that is capable of measuring heat flux of a thick plate in a radial direction by measuring temperatures at points depressed from a second temperature measuring part in a central direction so as to have different depths and measuring heat flux of the thick plate in a thickness direction by measuring temperatures at different points formed in the thickness direction, using 2-dimenional inverse heat conduction method for determining heat flux of a surface from abnormal temperature distribution in a solid. The present invention provides a gauge for measuring 2-dimensional heat flux according to claim 1.

The first temperature measuring part is provided with a first insertion groove part formed of a plurality of insertion grooves having the same depth from different positions on an outer surface, spaced apart from each other in the thickness direction, the second temperature measuring part is provided with a second insertion groove part formed of a plurality of insertion grooves having different depths from different positions on an outer surface, spaced apart from each other in the circumferential direction, and the gauge for measuring 2-dimensional heat flux further includes a temperature sensor part inserted into the insertion grooves of the first insertion groove part and the second insertion groove part and measuring temperatures at the measuring points.

The gauge for measuring 2-dimensional heat flux may further include a third temperature measuring part provided on the other end portion of the first temperature measuring part and provided with a third insertion groove part formed of a plurality of insertion grooves having different depths from different positions on an outer surface, spaced apart from each other in the circumferential direction, in the central direction.

A transverse cross-section of the second temperature measuring part or the third temperature measuring part may have a polygonal shape.

The first temperature measuring part also includes a plurality of different measuring points spaced apart from each other in the circumferential direction.

The first temperature measuring part is provided with an auxiliary insertion groove part neighboring the second insertion groove part in the thickness direction and formed of a plurality of insertion grooves having different depths in the circumferential direction, and the gauge for measuring 2-dimensional heat flux further includes an auxiliary temperature sensor part inserted into the insertion grooves of the auxiliary insertion groove part and measuring a temperature of the auxiliary insertion groove part.

A plurality of heaters forming one layer may be installed in a plurality of layers on sides of the first temperature measuring part, wherein the heaters installed in each layer may be arranged at equal angles, and the heaters installed in neighboring layers are arranged at intervals of 45 degrees in order to uniformly heat the first temperature measuring part.

According to an exemplary embodiment of the present invention, a gauge for measuring 2-dimensional heat flux that is capable of measuring heat flux in a thickness direction using temperatures measured at two different measuring points in the thickness direction of a thick plate and that is capable of measuring heat flux in a radial direction using temperatures at two measuring points spaced apart from each other along an outer surface of the thick plate and having different depths may be provided.

In addition, temperatures of a second temperature measuring part corresponding to an upper surface of the thick plate and a third temperature measuring part corresponding to a lower surface of the thick plate are measured, thereby making it possible to simultaneously measure cooling characteristics of the upper and lower surfaces of the thick plate.

Further, a transverse cross-section of the second temperature measuring part has a polygonal shape, such that positions of insertion grooves in which temperature sensor parts are to be installed may be easily measured, thereby making it possible to significantly improve accuracy of heat flow data that may be obtained by the gauge for measuring 2-dimensional heat flux.

Further, the heat flux of the second temperature measuring part in the radial direction may be measured, such that heat flow data at the time of actually acceleration-cooling the thick plate may be measured.

Furthermore, a first temperature measuring part may be heated so as to have a uniform temperature by heaters that are regularly arranged, such that the gauge for measuring 2-dimensional heat flux is provided in the same state as that of the thick plate, thereby making it possible to significantly improve accuracy of heat flow data that may be obtained by the gauge for measuring 2-dimensional heat flux.

### BRIEF DESCRIPTION OF THE DRAWINGS

FIG. 1 is a perspective view schematically showing a gauge for measuring 2-dimensional heat flux according to a first exemplary embodiment of the present invention.
FIG. 2 is an exploded perspective view schematically showing the gauge for measuring 2-dimensional heat flux of FIG. 1.
FIG. 3 is a top view schematically showing a second temperature measuring part in the gauge for measuring 2-dimensional heat flux of FIG. 1.
FIG. 4 is a top view schematically showing a form in which heaters are inserted into a first temperature measuring part in the gauge for measuring 2-dimensional heat flux of FIG. 1.
FIG. 5 is a side view schematically showing the first temperature measuring part in the gauge for measuring 2-dimensional heat flux of FIG. 1.
FIG. 6 is a perspective view schematically showing a gauge for measuring 2-dimensional heat flux according to a second exemplary embodiment of the present invention.
FIG. 7 is a front view schematically showing the gauge for measuring 2-dimensional heat flux of FIG. 6.
FIG. 8 is a cross-sectional view schematically showing a form in which an auxiliary insertion groove part and an auxiliary temperature sensor part are installed in a first temperature measuring part in the gauge for measuring 2-dimensional heat flux of FIG. 6.
FIG. 9 is a top view schematically showing a third temperature measuring part in the gauge for measuring 2-dimensional heat flux of FIG. 6.

### DETAILED DESCRIPTION OF THE EMBODIMENTS

Prior to describing the present invention, in several exemplary embodiments, components having the same configuration will be representatively described using the same reference numeral in a first exemplary embodiment, and components different from those of a first exemplary embodiment will be described in the other exemplary embodiments.

Hereinafter, a gauge for measuring 2-dimensional heat flux according to exemplary embodiments of the present invention will be described with reference to the accompanying drawings.

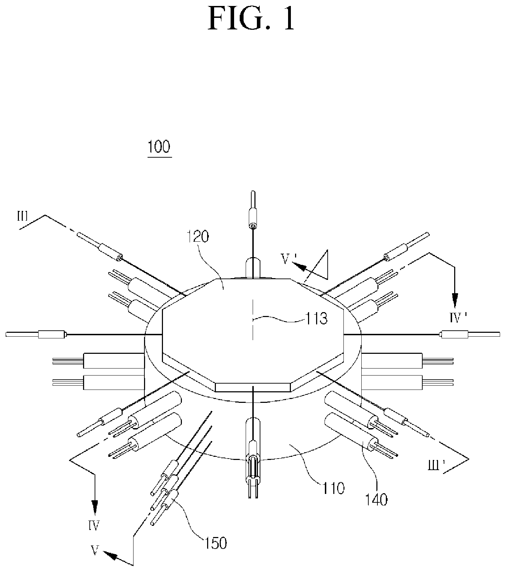

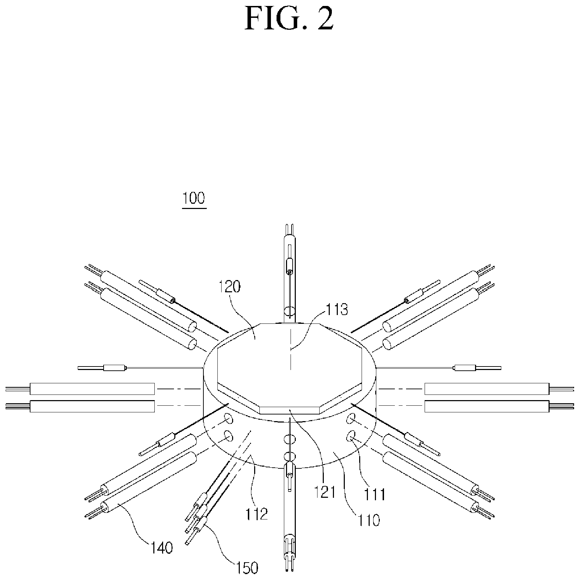

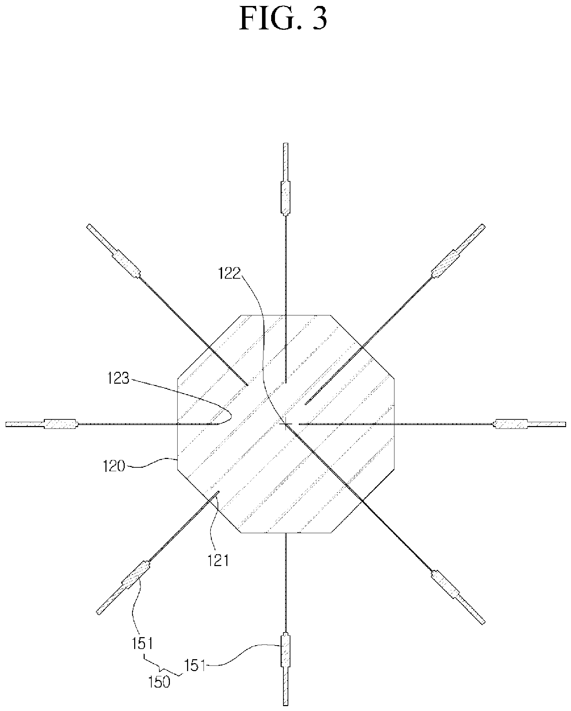

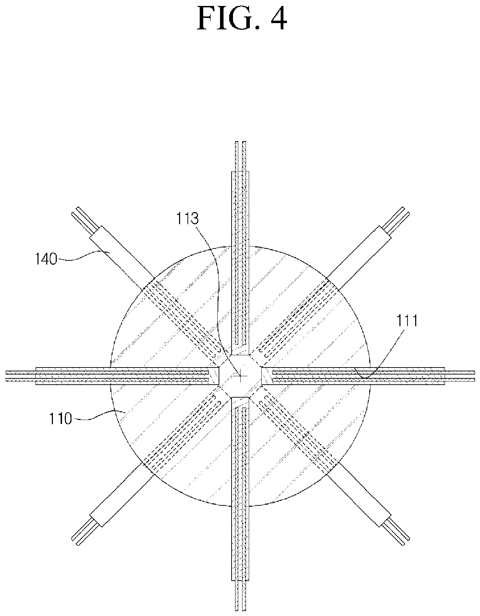

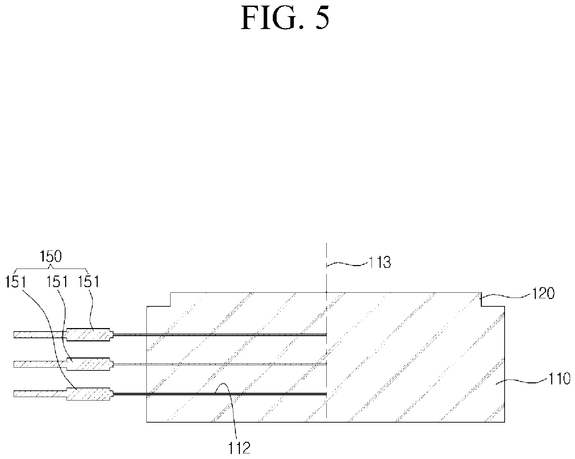

FIG. 1 is a perspective view schematically showing a gauge for measuring 2-dimensional heat flux according to a first exemplary embodiment of the present invention, FIG. 2 is an exploded perspective view schematically showing the gauge for measuring 2-dimensional heat flux of FIG. 1, FIG. 3 is a top view schematically showing a second temperature measuring part in the gauge for measuring 2-dimensional heat flux of FIG. 1, FIG. 4 is a top view schematically showing a form in which heaters are inserted into a first temperature measuring part in the gauge for measuring 2-dimensional heat flux of FIG. 1, and FIG. 5 is a side view schematically showing the first temperature measuring part in the gauge for measuring 2-dimensional heat flux of FIG. 1.

Referring to FIGS. 1 to 5, the gauge 100 for measuring 2-dimensional heat flux according to a first exemplary embodiment of the present invention, which is used to measure heat transfer characteristics of a thick plate passing through an accelerated cooling device in an accelerated cooling process of the thick plate, is configured to include a first temperature measuring part 110, a second temperature measuring part 120, heaters 140, and a temperature sensor part 150. The gauge for measuring 2-dimensional heat flux may be used as a means for testing cooling characteristics of the accelerated cooling device before an actual accelerated cooling process of the thick plate.

The first temperature measuring part 110 is provided with different measuring points spaced apart from each other in a thickness direction, and is provided with heater insertion holes 111 into which heaters 140 to be described below are inserted and a first insertion groove part 112 into which the temperature sensor part 150 is inserted. The gauge 100 for measuring 2-dimensional heat flux according to a first exemplary embodiment of the present invention has a cylindrical shape, but is not limited thereto.

The first temperature measuring part 110 may be made of the same material as that of the thick plate, but is preferably made of stainless steel in order to improve durability of measurement and minimize additional thermal consideration factors by transformation heat generation generated in general carbon steel. In an exemplary embodiment of the present invention, the first temperature measuring part is made of a stainless steel (SUS) material having a low coefficient of thermal expansion, but is not limited thereto.

Referring to FIG. 4, the heater insertion holes 111 are provided so that heaters 140 to be described below are inserted therein, and are formed in a central direction along an outer surface. In order for the first temperature measuring part 110 and the second temperature measuring part 120 to be efficiently heated by the heaters 140, the heat insertion holes 111 are arranged so that four heater insertion holes 111 form one layer and form equal angles. In addition, heater insertion holes 111 neighboring each other in a vertical direction are installed so as to form an angle of 45 degrees therebetween. This arrangement is used to heat the first temperature measuring part 110 to a uniform temperature by the heaters 140 that are to be inserted into the heat insertion holes 111.

Referring to FIG. 5, the first insertion groove part 112 is configured so that temperature sensors 151 configuring a temperature sensor part 150 to be described below are inserted therein, thereby making it possible to allow temperatures of the measuring points of the first temperature measuring part 110 to be measured. In the gauge 100 for measuring 2-dimensional heat flux according to the present invention, a plurality of insertion grooves configuring the first insertion groove part 112 are formed so as to be spaced apart from each other in the thickness direction of the first temperature measuring part 110 and have the same depth in the central direction. However, even if one insertion groove is formed, heat flux may be measured using a temperature difference and a distance difference between insertion grooves formed in second or third temperature measuring parts 120 or 130 to be described below. Therefore, the present invention is not limited to the number of insertion grooves.

In addition, the insertion grooves of the first insertion groove part 112 are preferably inserted up to the center of the first temperature measuring part 110 so as to accurately measure heat flux in a thickness direction to be described below, but are not limited thereto.

Referring to FIG. 3, the second temperature measuring part 120 is provided on the first temperature measuring part 110 and includes a second insertion groove part 121 formed therein so as to measure heat flux of the thick plate in a radial direction. It is preferable that insertion grooves of the second insertion groove part 121 have different depths from different positions on an outer surface, are spaced apart from each other in a circumferential direction in the central direction, and are formed at intervals corresponding to equal angles so as to not have an influence on each other.

In addition, it is preferable that a transverse cross-section of the second temperature measuring part 120 has a polygonal shape in order to easily manufacture the second insertion groove part 121 having the arrangement as described above and easily measure a central axis 113 of the second temperature measuring part 120.

In the gauge 100 for measuring 2-dimensional heat flux according to a first exemplary embodiment of the present invention, the transverse cross-section of the second temperature measuring part 120 has an octagonal shape. This is because eight measuring points of the second temperature measuring part 120 are selected. That is, the number of sides of the polygonal shape is the same as the number of measuring points in the second temperature measuring part 120. For example, when there are four measuring points, it is preferable that the transverse cross-section of the second temperature measuring part 120 has a square shape.

The second insertion groove part 121 is formed of a plurality of insertion grooves spaced apart from each other in the circumferential direction along an outer surface of the second temperature measuring part and having different depths in the central direction, and is configured so that temperature sensors 151 configuring the temperature sensor part 150 to be described below are inserted therein, thereby making it possible to allow temperatures of the measuring points of the second temperature measuring part 120 to be measured.

Alternatively, the second insertion groove part 121 is formed of one insertion groove, such that one insertion groove changes measuring points at each of different depths, thereby making it possible to measure temperatures. However, when the second insertion groove part is formed of one insertion groove, it is difficult to accurately measure temperatures of the measuring points. Therefore, it is preferable that the plurality of insertion grooves having different depths are formed so as to be spaced apart from each other along the outer surface.

In the gauge 100 for measuring 2-dimensional heat flux according to a first exemplary embodiment of the present invention, seven insertion grooves are formed at the centers of seven surfaces except for a measuring point provided in order to measure a temperature of a surface among eight surfaces formed on the outer surface of the second temperature measuring part 120. The temperature sensors 151 of the temperature sensor part 150 are inserted into the seven insertion grooves, respectively, to measure temperatures of distal end portions of the insertion grooves.

The heaters 140 are detachably inserted into the heater insertion holes 111 to uniformly heat the first temperature measuring part 110 and the second temperature measuring part 120. According to an exemplary embodiment of the present invention, the heater 140 is a cartridge heater, but is not limited thereto.

The cartridge heater used as the heater 140, which is an apparatus inserted into an insertion hole formed in a mold used in a press or a thermoformer and is mainly used to transfer heat emitted by an electric heat coil, thereby heating a limited space part in the mold, has a cylindrical shape in an exemplary embodiment of the present invention.

In addition, temperatures of the first temperature measuring part 110 and the second temperature measuring part 120 heated by the heaters 140 become about 900 °C corresponding to a temperature at which the thick plate generally starts to be cooled in the accelerated cooling process.

The temperature sensor part 150 is formed of a plurality of temperature sensors 151, and is used to sense the temperatures of the first temperature measuring part 110 and the second temperature measuring part 120 in the accelerated cooling process. The plurality of temperature sensors 151 are inserted into the insertion grooves formed in the first temperature measuring part 110 and the second temperature measuring part 120, respectively, to sense temperatures of distal end portions of the insertion grooves. In the gauge 100 for measuring 2-dimensional heat flux according to a first exemplary embodiment of the present invention, the temperature sensor 151 is a thermocouple, but is not limited thereto.

Again describing a coupled relationship between the first temperature measuring part 110 and the second temperature measuring part 120, it is preferable that the second temperature measuring part 120 is provided on the first temperature measuring part 110 and that the first temperature measuring part 110 and the second temperature measuring part 120 are installed so that central axes thereof are the same. The first temperature measuring part 110 and the second temperature measuring part 120 may be formed integrally with each other so that the axes thereof are the same, but are not limited thereto.

Again describing a coupled relationship between the first insertion groove part 112 or the second insertion groove part 121 and the temperature sensors 151, the temperature sensors 151 are installed so as to be completely inserted into the insertion grooves of the first insertion groove part 112 or the second insertion groove part 121 to measure the temperatures of the measuring points of the first temperature measuring part 110 or the second temperature measuring part 120.

In addition, it is preferable that empty spaces of the insertion grooves into which the temperature sensors 151 are inserted are filled with the same metal material as that of the second temperature measuring part 120 in order to prevent heat flow from being hindered by empty spaces in which the insertion grooves are formed. The empty spaces of the insertion grooves may be filled by a laser welding method, but are not limited thereto. Further, in addition to a method for filling the empty spaces later, the temperature sensors 151 may be manufactured in a state in which they are inserted into the first temperature measuring part 110 or the second temperature measuring part 120 at the beginning, but is not limited thereto.

Next, a method for measuring heat flux using the gauge 100 for measuring 2-dimensional heat flux not forming part of the invention will be described.

The first temperature measuring part 110 and the second temperature measuring part 120 are heated to generally uniform temperatures by the plurality of heaters 140 installed in the first temperature measuring part 110, and it is preferable that the heated temperatures become about 900 °C corresponding to a temperature at which the thick plate generally starts to be cooled in the accelerated cooling process.

After the first temperature measuring part 110 and the second temperature measuring part 120 are sufficiently heated by the heaters 140, the temperatures of the distal end portions of the respective insertion grooves are measured by the temperature sensors 151 installed in the respective insertion grooves.

An insertion groove provided in the second insertion groove part 121 in order to measure a central temperature of the second temperature measuring part 120 is selected as a first measuring point 122, and any one of the insertion grooves except for the first measuring point 122 is selected as a second measuring point 123 to calculate heat flux of the second temperature measuring part 120 in the radial direction using a temperature difference and a distance difference between the first measuring point 122 and the second measuring point 123. The heat flux in the radial direction as described above may be calculated by a 2-dimenional inverse heat conduction method through the temperature measured by the second temperature measuring part 120 and the temperature measured by the first temperature measuring part 110.

It is ideal for the first measuring point 122 to be positioned on an upper surface of the second temperature measuring part 120 in order to measure the heat flux of the second temperature measuring part 120. However, in this case, the temperature sensor 151 is exposed to the outside to hinder a fluid flow, such that heat flow data in a normal environment may not be obtained. Therefore, the second insertion groove part 121 including the first measuring point 122 is not exposed to the upper surface of the second temperature measuring part 120. However, since a point at which the second insertion groove part 121 is installed is close to the upper surface of the second temperature measuring part 120, it may be considered that the point is substantially the same as the upper surface of the second temperature measuring part 120.

Although water jet is provided as a fluid having a lower temperature than those of the first temperature measuring part 110 and the second temperature measuring part 120 heated by the heaters 140 and sprayed in an exemplary embodiment of the present invention in order to cool the first temperature measuring part 110 and the second temperature measuring part 120, the present invention is not limited thereto.

Next, a gauge 200 for measuring 2-dimensional heat flux according to a second exemplary embodiment of the present invention will be described.

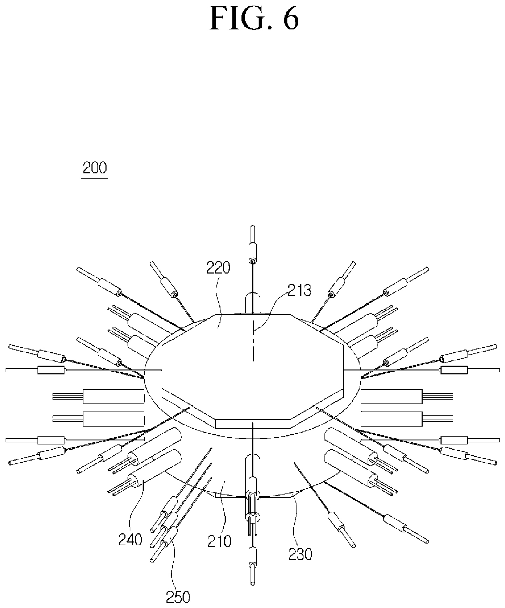

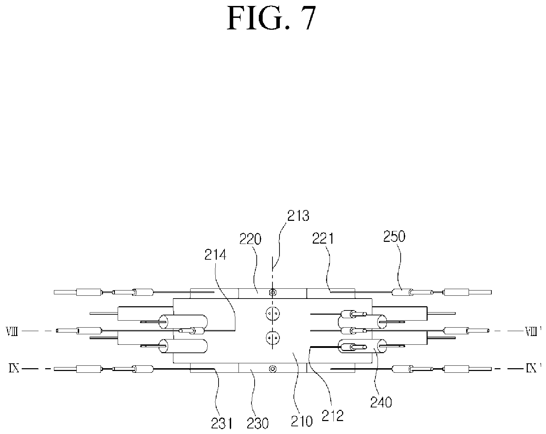

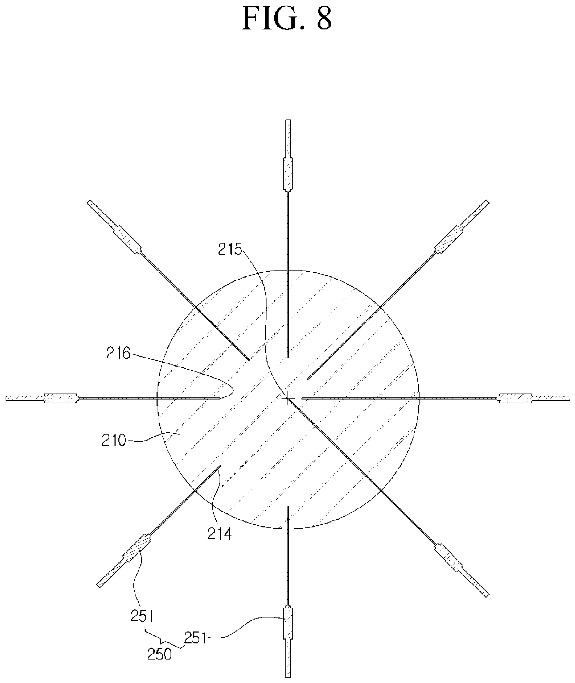

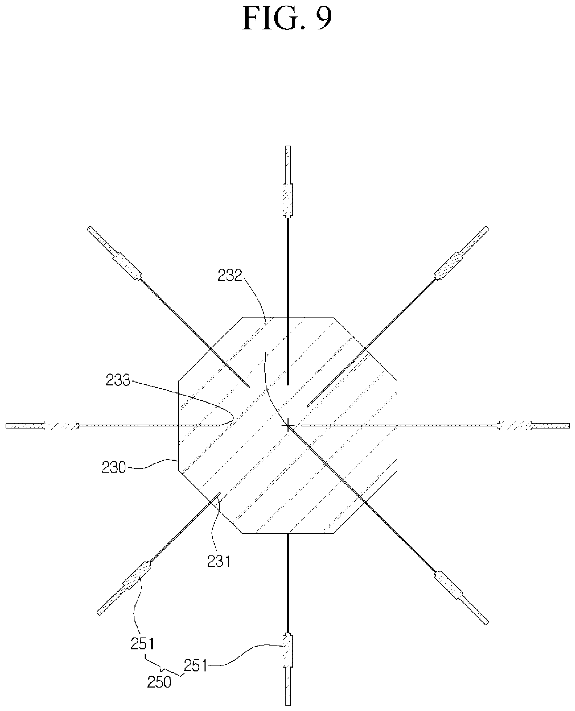

FIG. 6 is a perspective view schematically showing a gauge for measuring 2-dimensional heat flux according to a second exemplary embodiment of the present invention, FIG. 7 is a front view schematically showing the gauge for measuring 2-dimensional heat flux of FIG. 6, FIG. 8 is a cross-sectional view schematically showing a form in which an auxiliary insertion groove part and an auxiliary temperature sensor part are installed in a first temperature measuring part in the gauge for measuring 2-dimensional heat flux of FIG. 6, and FIG. 9 is a top view schematically showing a third temperature measuring part in the gauge for measuring 2-dimensional heat flux of FIG. 6.

Referring to FIGS. 6 to 9, the gauge 200 for measuring 2-dimensional heat flux according to a second exemplary embodiment of the present invention is configured to include a first temperature measuring part 210, a second temperature measuring part 220, a third temperature measuring part 230, heaters 240, and a temperature sensor part 250.

The first temperature measuring part 210 includes heater insertion holes 211 into which the heaters 240 are inserted, a first insertion groove part 212 provided in order to measure heat flux in the thickness direction, and an auxiliary insertion groove part 214 provided in order to measure heat flux in the radial direction.

The auxiliary insertion groove part 214 is configured so that temperature sensors 251 configuring the temperature sensor part 250 are inserted therein, thereby allowing temperatures at measuring points disposed at different positions on an outer surface of the first temperature measuring part 210 and spaced apart from each other in the circumferential direction to be measured to allow heat flux of the first temperature measuring part 210 in the radial direction to be measured. The auxiliary insertion groove part 214 includes a plurality of insertion grooves depressed in the central direction and formed so as to be spaced apart from each other along the outer surface of the first temperature measuring part 210. In the gauge 200 for measuring 2-dimensional heat flux according to a second exemplary embodiment of the present invention, the auxiliary insertion groove part 214 may include one of the insertion grooves of the first insertion groove part 212 and select one of the insertion grooves of the first insertion groove part 212 as a third measuring point 215.

The third temperature measuring part 230 is provided beneath the first temperature measuring part 210, and includes a third insertion groove part 231 formed therein so as to measure heat flux of the thick plate in the radial direction. It is preferable that insertion grooves of the third insertion groove part 231 are formed at intervals corresponding to equal angles so as not to have an influence on each other, and it is preferable that a transverse cross-section of the third temperature measuring part 230 has a polygonal shape in order to easily manufacture the third insertion groove part 231 having the arrangement as described above and easily measure a central axis 213 of the third temperature measuring part 230. Since configurations of the third temperature measuring part 230 other than the above-mentioned configurations are the same as those of the second temperature measuring part 220, a detailed description thereof will be omitted.

Next, a method for measuring heat flux using the gauge 200 for measuring 2-dimensional heat flux not forming part of the present invention described above will be described.

Heat flux of the first temperature measuring part 210 in the radial direction may be measured by the above-mentioned 2-dimensional inverse heat conduction method. An insertion groove provided in the auxiliary insertion groove part 214 in order to measure a central temperature of the first temperature measuring part 210 is selected as the third measuring point 215, and any one of the insertion grooves except for the third measuring point 215 is selected as a fourth measuring point 216 to calculate the heat flux of the first temperature measuring part 210 in the radial direction using a temperature difference and a distance difference between the third measuring point 215 and the fourth measuring point 216.

In addition, heat flux of the third temperature measuring part 230 in the radial direction may also be measured by the above-mentioned 2-dimensional inverse heat conduction method. An insertion groove provided in the third insertion groove part 231 in order to measure a central temperature of the third temperature measuring part 230 is selected as a fifth measuring point 232, and any one of the insertion grooves except for the fifth measuring point 232 is selected as a sixth measuring point 233 to calculate the heat flux of the third temperature measuring part 230 in the radial direction using a temperature difference and a distance difference between the fifth measuring point 232 and the sixth measuring point 233.

In addition, heat flux in the thickness direction may be measured by the above-mentioned 2-dimensional inverse heat conduction method using a temperature difference and a distance difference between the first measuring point 122 and the fifth measuring point 232, and the heat flux in the thickness direction as described above may be considered as heat flux from an upper surface of the thick plate to a lower surface thereof.

### <Description of Symbols>

100: gauge for measuring 2-dimensional heat flux
110: first temperature measuring part
111: heater insertion hole
112: first insertion groove part
113: central axis
120: second temperature measuring part
121: second insertion groove part
122: first measuring point
123: second measuring point
140: heater
150: temperature sensor part
151: temperature sensor
200: gauge for measuring 2-dimensional heat flux
210: first temperature measuring part
211: heater insertion hole
212: first insertion groove part
213: central axis
214: auxiliary insertion groove part
215: third measuring point
216: fourth measuring point
220: second temperature measuring part
221: second insertion groove part
222: first measuring point
223: second measuring point
230: third temperature measuring part
231: third insertion groove part
232: fifth measuring point
233: sixth measuring point
240: heater
250: temperature sensor part
251: temperature sensor

## Claims

1. A gauge (100, 200) for measuring 2-dimensional heat flux, **characterized in that** the gauge (100, 200) comprises a first temperature measuring part (110, 210) including a plurality of different measuring points spaced apart from each other in a thickness direction, the first temperature measuring part (110, 210) being provided with a first insertion groove part (112, 212) formed of a plurality of insertion grooves having the same depth from different positions on an outer surface in a central direction, and spaced apart from each other in the thickness direction;
a second temperature measuring part (120, 220) provided on one end portion of the first temperature measuring part (110, 210) and including a plurality of different measuring points spaced apart from each other in a circumferential direction, the second temperature measuring part (120, 220) being provided with a second insertion groove part (121, 221) formed of a plurality of insertion grooves having different depths from different positions on an outer surface in a central direction, and spaced apart from each other in the circumferential direction;
heaters (140, 240) installed in the first temperature measuring part (110, 210) and configured for heating the first temperature measuring part (110, 210) and the second temperature measuring part (120, 220); and
the gauge (100, 200) for measuring 2-dimensional heat flux further comprising a temperature sensor part (150,250) inserted into the insertion grooves of the first insertion groove part (112, 212) and of the second insertion groove part (121, 221) and configured for measuring temperatures at the measuring points,
wherein
the first temperature measuring part (110, 210) also includes a plurality of different measuring points spaced apart from each other in the circumferential direction,
the first temperature measuring part (110, 210) is provided with an auxiliary insertion groove part (214) neighboring the second insertion groove part (121, 221) in the thickness direction and formed of a plurality of insertion grooves having different depths in the circumferential direction, and
the gauge (100,200) for measuring 2-dimensional heat flux further comprises an auxiliary temperature sensor part (150,250) inserted into the insertion grooves of the auxiliary insertion groove part (214) and measuring a temperature of the auxiliary insertion groove part (214).

2. The gauge (100, 200) for measuring 2-dimensional heat flux of claim 1, further comprising
a third temperature measuring part (230) provided on the other end portion of the first temperature measuring part (110, 210) and provided with a third insertion groove part (231) formed of a plurality of insertion grooves having different depths from different positions on an outer surface in a central direction, and spaced apart from each other in the circumferential direction.

3. The gauge (100, 200) for measuring 2-dimensional heat flux of claim 2, wherein
a transverse cross-section of the second temperature measuring part (120, 220) or the third temperature measuring part (230) has a polygonal shape.

4. The gauge (100,200) for measuring 2-dimensional heat flux of claim 1, wherein
a plurality of heaters (140, 240) forming one layer are installed in a plurality of layers on sides of the first temperature measuring part (110, 210), wherein
the heaters (140, 240) installed in each layer are arranged at equal angles, and the heaters (140) installed in neighboring layers are arranged at intervals of 45 degrees.

## Patentansprüche

1. Ein Messgerät (100, 200) zur Messung zweidimensionaler Wärmeflüsse, das **dadurch gekennzeichnet ist, dass** das Messgerät (100, 200) Folgendes umfasst:
ein erstes Temperatur-Messteil (110, 210), einschließlich einer Vielzahl von verschiedenen Messpunkten, die in Dickenrichtung voneinander beabstandet sind. Das erste Temperatur-Messteil (110, 210) wird mit einem ersten Einstecknuten-Teil (112, 212) bereitgestellt, das aus einer Vielzahl von Einstecknuten gleicher Tiefe gebildet wird, die sich an verschiedenen Positionen der äußeren Oberfläche in zentraler Richtung befinden und in Dickenrichtung voneinander beabstandet sind.
ein zweites Temperatur-Messteil (120, 220), das an einem Endabschnitt des ersten Temperatur-Messteils (110, 210) bereitgestellt wird und eine Vielzahl unterschiedlicher Messpunkte umfasst, die in Umlaufrichtung voneinander beabstandet sind. Das zweite Temperatur-Messteil (120, 220) wird mit einem zweiten Einstecknuten-Teil (121, 221) bereitgestellt, das aus einer Vielzahl von Einstecknuten unterschiedlicher Tiefe gebildet wird, die sich an verschiedenen Positionen der äußeren Oberfläche in zentraler Richtung befinden und in Umlaufrichtung voneinander beabstandet sind.
Heizelemente (140, 240), die im ersten Temperatur-Messteil (110, 210) angebracht sind und auf das Erhitzen des ersten (110, 210) und zweiten (120, 220) Temperatur-Messteils konfiguriert werden; und
das Messgerät (100, 200) zur Messung zweidimensionaler Wärmeflüsse umfasst weiterhin ein Temperatursensor-Teil (150, 250), welches in die Einstecknuten des ersten (112, 212) und zweiten (121, 221) Einstecknuten-Teils eingesteckt ist und auf die Messung von Temperaturen an den Messpunkten konfiguriert ist,
wobei
das erste Temperatur-Messteil (110, 210) ebenfalls eine Vielzahl verschiedener Messpunkte umfasst, die in Umlaufrichtung voneinander beabstandet sind,
das erste Temperatur-Messteil (110, 210) mit einem zusätzlichen Einstecknut-Teil (214) bereitgestellt wird, das in Dickenrichtung an das zweite Einstecknut-Teil (121, 221) grenzt und in Umlaufrichtung aus einer Vielzahl von Einstecknuten unterschiedlicher Tiefe gebildet wird, und
das Messgerät (100, 200) zur Messung zweidimensionaler Wärmeflüsse umfasst weiterhin ein zusätzliches Temperatursensor-Teil (150, 250), das in die Einstecknuten des zusätzlichen Einstecknuten-Teils (214) gesteckt wird und dessen Temperatur misst.

2. Das Messgerät (100, 200) zur Messung zweidimensionaler Wärmeflüsse gemäß Anspruch 1, das weiterhin ein drittes Temperatur-Messteil (230) umfasst, welches am anderen Endabschnitt des ersten Temperatur-Messteils (110, 210) bereitgestellt wird und mit einem dritten Einstecknuten-Teil (231) ausgestattet ist, das an verschiedenen Stellen in zentraler Richtung aus einer Vielzahl von Einstecknuten unterschiedlicher Tiefe gebildet wird und die in Umlaufrichtung voneinander beabstandet sind.

3. Das Messgerät (100, 200) zur Messung zweidimensionaler Wärmeflüsse gemäß Anspruch 2, wobei
der transversale Querschnitt des zweiten Temperatur-Messteils (120, 220) oder des dritten Temperatur-Messteils (230) eine vieleckige Form hat.

4. Das Messgerät (100, 200) zur Messung zweidimensionaler Wärmeflüsse gemäß Anspruch 1, wobei
eine Vielzahl von Heizelementen (140, 240), die eine Schicht bilden, in einer Vielzahl von Schichten an der Seite des ersten Temperatur-Messteils (110, 210) angebracht werden, wobei
die Heizelemente (140, 240) in jeder Schicht in gleichen Winkeln angeordnet sind die die Heizelemente (140), die in benachbarten Schichten angebracht sind, in Intervallen von 45 angeordnet sind.

## Revendications

1. Jauge (100, 200) de mesure de flux thermique en deux dimensions, **caractérisée en ce que** la jauge (100, 200) comprend
une première partie de mesure de température (110, 210) comportant une pluralité de points de mesure différents espacés les uns des autres dans une direction de l'épaisseur, la première partie de mesure de température (110, 210) étant pourvue d'une première partie de rainure d'insertion (112, 212) formée d'une pluralité de rainures d'insertion ayant la même profondeur à partir de différentes positions sur une surface externe dans une direction centrale, et espacées les unes des autres dans la direction de l'épaisseur ;
une deuxième partie de mesure de température (120, 220) prévue sur une partie d'extrémité de la première partie de mesure de température (110, 210) et comportant une pluralité de points de mesure différents espacés les uns des autres dans une direction circonférentielle, la deuxième partie de mesure de température (120, 220) étant pourvue d'une deuxième partie de rainure d'insertion (121, 221) formée d'une pluralité de rainures d'insertion ayant des profondeurs différentes à partir de différentes positions sur une surface externe dans une direction centrale, et espacées les unes des autres dans la direction circonférentielle ;
des éléments chauffants (140, 240) installés dans la première partie de mesure de température (110, 210) et configurés pour chauffer la première partie de mesure de température (110, 210) et la deuxième partie de mesure de température (120, 220) ; et
la jauge (100, 200) de mesure de flux thermique en deux dimensions comprenant en outre une partie de capteur de température (150, 250) insérée dans les rainures d'insertion de la première partie de rainure d'insertion (112, 212) et de la deuxième partie de rainure d'insertion (121, 221) et configurée pour mesurer les températures aux points de mesure,
où
la première partie de mesure de température (110, 210) comporte également une pluralité de points de mesure différents espacés les uns des autres dans la direction circonférentielle,
la première partie de mesure de température (110, 210) est pourvue d'une partie de rainure d'insertion auxiliaire (214) voisine de la deuxième partie de rainure d'insertion (121, 221) dans la direction de l'épaisseur et formée d'une pluralité de rainures d'insertion ayant des profondeurs différentes dans la direction circonférentielle, et
la jauge (100, 200) de mesure de flux thermique en deux dimensions comprend en outre une partie de capteur de température auxiliaire (150, 250) insérée dans les rainures d'insertion de la partie de rainure d'insertion auxiliaire (214) et mesurant une température de la partie de rainure d'insertion auxiliaire (214).

2. Jauge (100, 200) de mesure de flux thermique en deux dimensions de la revendication 1, comprenant en outre
une troisième partie de mesure de température (230) prévue sur l'autre partie d'extrémité de la première partie de mesure de température (110, 210) et pourvue d'une troisième partie de rainure d'insertion (231) formée d'une pluralité de rainures d'insertion ayant des profondeurs différentes à partir de différentes positions sur une surface externe dans une direction centrale, et espacées les unes des autres dans la direction circonférentielle.

3. Jauge (100, 200) de mesure de flux thermique en deux dimensions de la revendication 2, dans laquelle
une section transversale de la deuxième partie de mesure de température (120, 220) ou de la troisième partie de mesure de température (230) a une forme polygonale.

4. Jauge (100, 200) de mesure de flux thermique en deux dimensions de la revendication 1, dans laquelle
une pluralité d'éléments chauffants (140, 240) formant une couche sont installés dans une pluralité de couches sur les côtés de la première partie de mesure de température (110, 210), où
les éléments chauffants (140, 240) installés dans chaque couche sont agencés à angles égaux, et les éléments chauffants (140) installés dans des couches voisines sont agencés à intervalles de 45 degrés.
